# EUROPEAN PATENT APPLICATION

(11) **EP 3 772 401 A1**
(43) Date of publication of application: **10.02.2021**
(21) Application number: 20189783.2
(22) Date of filing: 06.08.2020
(51) Int. Cl.: B29C 44/34, B29C 44/44, C08J 9/22, A42B 3/12, C08J 9/232, C08J 9/236, C08J 9/32, B29D 99/00

(54) **COMPOSITE MATERIAL AND METHOD FOR HOT-MOLDING**

(30) Priority: 08.08.2019 IT 201900014454
(71) Applicant: Giorgia, Daniel, 31050 Vedelago (TV) (IT)
(72) Inventor: Giorgia, Daniel, 31050 Vedelago (TV) (IT)
(74) Representative: Citron, Massimiliano

(57) **Abstract**

An improved material is described for molding an object formed by an inner core and an external carbon, coating.

The inner core is initially composed of a powder formed by expanded microspheres and expandable unexpanded microspheres, and is then heated in a mold up to a firing temperature Tc to solidify. Dduring heating the core produces an overall pressure on the coating with divergent course caused by the sequential activation of the expansion of microspheres.

## Description

The invention refers to a method and composite material for hot molding objects having an inner carbon-coated core.

It is known to produce objects by molding carbon with an inner expanding core. The expansion of the inner core is useful to push the carbon coating against the walls of the mold and faithfully copy its shape. In particular, such an inner core is known from WO2012140473 or EP0585965. The core is made of composite material that contains hollow, expanding synthetic microspheres.

A recent problem is that for the molding of certain sophisticated and/or peculiarly shaped pieces, the pressure of the microspheres must be released in a controlled way and according to a predefined divergent time-course.

However, the art lacks a material of the aforementioned type that allows this freedom of design.

The main object of the invention is then to propose a material of the aforementioned type and a molding method that has more advantageous characteristics.

The invention is defined in the attached claims, wherein the dependent one define advantageous variants.

A method is proposed of molding an object formed by an inner core and an outer, e.g. carbon or plastic, coating,
wherein the inner core
is initially composed of a powder formed by expanded microspheres and expandable unexpanded microspheres, the microspheres being made of glass or plastic material, of closed shape, hollow and filled with gas;
is then heated in a mold up to a firing temperature Tc to solidify, and
during the heating up to the firing temperature Tc, expands and presses the coating against the mold cavity to copy its shape,
wherein
during the heating up to the firing temperature Tc the core produces an overall pressure on the coating with a divergent time-course caused by the sequential activation of the expansion of microspheres at at least two different temperatures T1, T2 (T1 < T2 <= Tc).

Another aspect of the invention concerns a composite material - usable in the method - made of expanded microspheres and expandable unexpanded microspheres,
the microspheres being in plastic material, of closed shape, hollow and filled with gas.
wherein the expandable unexpanded microspheres comprise
at least two groups of expandable unexpanded microspheres,
the microspheres of each group being configured to expand respectively at a temperature T1, T2 different from that of the other group.

The above-mentioned molding material allows a better quality of the molded piece, and the pressure exerted by the microspheres has a predefined divergent course over time.

Another aspect of the invention concerns the production of a mandrel or inner core of a carbon-coated object using the above method and/or material. The mandrel or inner core is molded or produced with a material as defined here, and then coated with one or more layers of carbon. The mandrel or inner core thus coated is placed in a mold and brought to a temperature that solidifies the carbon and the composite material.

An aspect of the invention concerns a padding, in particular of a helmet, or in general shock-absorbing cushions, produced with the above mentioned material and/or method.

An aspect of the invention concerns a carbon protection or shock-absorbing garment, such as a helmet, formed by means of the abovementioned method and/or material, comprising an outer carbon hard shell and an inner core formed by the abovementioned solidified composite material.

The molding method allows a better quality of the molded piece, and the pressure exerted by the microspheres has a predefined divergent course over time.

The method solves the problem of moldings in which the pressure of the microspheres must be released in a controlled manner and according to a predefined time course. In particular, the method solves the problem of moldings in which for the objects it is necessary that the core's pressure over time pushes the carbon against the walls of the mold not in a substantially linear way but with a divergent course. Every time the temperature reaches one of the temperatures T1, T2, the pressure exerted by the core acquires a contribution from the activated microspheres expanding at the temperature just reached. That is, every time the temperature reaches one of the temperatures T1, T2, the time derivative of the pressure exerted by the core increases due to the expansion of microspheres that begin to expand only at the temperature just reached.

The base material to be molded is composed by weight of 5-95% of expanded particles and 5-95% of unexpanded particles, the particles being made of glass or plastic material, of closed shape, hollow and filled with gas. These values guarantee advantageous performance and weight suitable for applications. The expanded particles are essential for the invention, and act as a binder or filler for the other microspheres. Indeed, the expanded microspheres are the filling element (filler), the unexpanded ones act as a binder.

The particles generally have a spherical shape and are very small (10-40 µm in diameter). Note, however, that size is not essential.

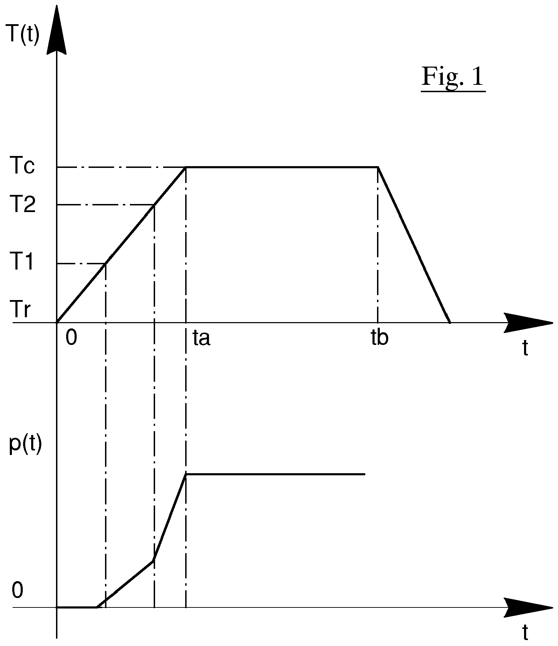

Fig. 1 shows a graph of the possible course over time t for the core's temperature T as achievable inside the mold.

At time t = 0 the mold is heated and the core's temperature increases - e.g. linearly - from room temperature Tt to a firing temperature Tc (curing) reached at time t = ta.

The temperature Tc remains until a time tb and then returns to room temperature Tr, when the baked and solidified object is removed from the mold.

The temperature ramp Tr → Tc contains two temperatures T1, T2 at which the expansion of a group of microspheres inside the core is activated.

To determine the at least two temperatures T1, T2, the expansion temperatures of the unexpanded microspheres are chosen correspondingly. Therefore, the above-mentioned unexpanded microspheres of the composite material will contain unexpanded microspheres, called M1, which expand at temperature T1 and unexpanded microspheres, called M2, which expand at temperature T2. By calibrating the relative proportions between M1 and M2 microspheres it is possible, for example, to determine the expansion level of the core at the temperatures T1 and T2.

The expansion temperature of a microsphere is a feature reproducible with quite modest precision. Then, due to the unavoidable (small) structural variability of the microspheres, the core is likely to start to physically expand in a neighborhood of T1 and T2, difficult to calculate theoretically. However, in practice, due also to the very high number of microspheres in the core, the activation of the expansion of a group of microspheres is concentrated on average in a neighborhood of T1 and T2.

Fig. 1 also shows a graph of the course over time t for the pressure p(t) exerted by the core on the carbon. Even if theoretically for the pressure p(t) the invention would allow a stepwise course, because of the statistical dispersion in the characteristics of the commercially available microspheres it is more likely that the course p(t) is a polyline and/or a curve that in correspondence of T1, T2 has a substantial increase of slope (the time derivative dp(t)/dt increases significantly in a neighborhood of T1, T2). In practice, for example, it can be T1 = 100 °C and T2 = 130 °C.

It is possible in the same way to program the expansion of the core even at more than two temperatures.

Another advantage of the method is that the core expansion can take place before and/or during the firing (if e.g. T2 = Tc). Thus, the carbon firing takes place when it has already been properly pressed against the mold cavity.

Another advantage of the method is that if due to the expansion of the core at temperature T1 some microspheres explode and cause the core to collapse, the subsequent expansion of the core at temperature T2 compensates for this collapse.

Below are preferred values for the variables at play, for which the method gives better results and/or better adapts to industrialization conditions:
T1 is selected in the range 100°C÷140°C; and/or
T2 is selected in the range 130°C÷160°C; and/or
deltaT = |T2-T1| (the "distance" between T1 and T2) is selected in the range 20°C÷40°C, e.g. 30°C; and/or
Tc is selected in the range 130°C÷150°C; and/or
ta is selected in the range 20÷40 min, e.g. 30 min; and/or
tb is selected in the range 50÷70 min, e.g. 60 min.

## Claims

1. Molding method of an object formed by an inner core and an external, e.g. carbon, coating, wherein the inner core
is initially composed of a powder formed by expanded microspheres and expandable unexpanded microspheres, the microspheres being made of glass or plastic material, of closed shape, hollow and filled with gas;
is then heated in a mold up to a firing temperature Tc to solidify, and
during heating up to the firing temperature Tc expands and presses the coating against the mold cavity to copy its shape,
wherein
during heating up to the firing temperature Tc the core produces an overall pressure on the coating with divergent course caused by the sequential activation of the expansion of microspheres,
said activation taking place at at least two different temperatures T1, T2.

2. Method according to claim 1, wherein the base material to be molded is composed by weight of 5-95% of expanded particles and 5-95% of unexpanded particles.

3. Method according to claim 1 or 2, wherein the expandable unexpanded microspheres comprise at least two groups of expandable unexpanded microspheres, the microspheres of each group being configured to expand respectively at a temperature T1, T2 different from that of the other group .

4. Method according to any of the previous claims, wherein the time derivative of the pressure exerted by the inner core on the external coating increases significantly only at the at least two different temperatures T1, T2.

5. Method according to any previous claim, wherein one of the at least two different temperatures T1, T2 is chosen in the range 100 °C to 140 °C and the other of the at least two different temperatures T1, T2 is chosen in the range of 130 °C to 160 °C.

6. Method according to any of the previous claims from 1 to 4, wherein the difference between the at least two different temperatures T1, T2 is chosen in the range 20 °C ÷ 40 °C.

7. Method according to any previous claim, wherein the firing temperature Tc is selected in the range 130 °C ÷ 150 °C.

8. Method according to any previous claim, wherein the object is a protection or garment for absorbing impacts, such as a helmet, comprising a rigid outer shell made of carbon and an inner core.

9. Protection or garment made of carbon and capable to absorb shocks, such as a helmet, comprising an external rigid carbon shell and an inner core, formed according to the method of one of the preceding claims.

10. Composite material formed by expanded microspheres and expandable unexpanded microspheres,
the microspheres being made of plastic material, of closed shape, hollow and filled with gas,
wherein the expandable unexpanded microspheres comprise at least two groups of expandable unexpanded microspheres,
the microspheres of each group being configured to expand respectively at a temperature T1, T2 different from that of the other group..
